Europäisches Patentamt

European Patent Office

Office européen des brevets

(19)

(11) Numéro de publication: **0 1 1 0 767**
**B1**

(12) **FASCICULE DE BREVET EUROPEEN**

(45) Date de publication du fascicule du brevet:
16.09.87

(51) Int. Cl.⁴: **G 06 F 7/52**

(21) Numéro de dépôt: **83402232.9**

(22) Date de dépôt: **18.11.83**

(54) Multiplieur binaire rapide.

(30) Priorité: **26.11.82 FR 8219921**

(73) Titulaire: **THOMSON SEMICONDUCTEURS, 101, bld Murat, F-75016 - Paris (FR)**

(43) Date de publication de la demande:
**13.06.84 Bulletin 84/24**

(72) Inventeur: **Fensch, Thierry, THOMSON-CSF SCPI 173, bld Haussmann, F-75379 Paris Cedex 08 (FR)**

(45) Mention de la délivrance du brevet:
**16.09.87 Bulletin 87/38**

(74) Mandataire: **Guérin, Michel et al, THOMSON-CSF SCPI 19, avenue de Messine, F-75008 Paris (FR)**

(84) Etats contractants désignés:
**DE FR GB IT NL**

(56) Documents cités:
**IEEE TRANSACTIONS ON COMPUTERS; vol. C-27, no. 3, mars 1978, pages 256-258, IEEE, New York, US P.Corsini et al.: "Uniform shift multiplication algorithms without overflow"**
**K. HWANG: "Computer arithmetic - principles, architecture, and design", 1979, pages 149-151, John Wiley & Sons, New York, US**

## Description

La présente invention concerne les multiplieurs numériques binaires.

Le principe de la multiplication de nombres binaires est classique: le multiplicande est multiplié par le chiffre de poids le plus faible de multiplicateur, puis par le chiffre de poids immédiatement supérieur, et ainsi de suite jusqu'au poids le plus fort; il en résulte à chaque fois un produit partiel, et les différents produits partiels sont additionnés avec un décalage latéral d'un chiffre vers la gauche entre chaque produit partiel et le précédent. La somme de tous les produits partiels progressivement décalés constitue le résultat de la multiplication.

Concrètement, on peut stocker un produit partiel dans un registre, décaler le résultat d'un rang, l'additionner au produit partiel suivant, stocker le résultat dans le même registre et ainsi de suite. Il s'agit d'un procédé séquentiel qui est long.

On a donc cherché à concevoir des multiplieurs dans lesquels tous les produits partiels sont générés simultanément et additionnés (logique combinatoire et non séquentielle), et on a essayé, pour ces multiplieurs, d'augmenter la vitesse de travail, soit en réduisant le temps d'addition des produits partiels, soit en réduisant le nombre de ces produits partiels.

Le temps d'addition peut être réduit grâce à l'utilisation d'additionneurs perfectionnés tels que:
- des additionneurs à sauvegarde de retenue où les retenues des additions élémentaires des chiffres d'un nombre ne sont pas propagées d'un chiffre au suivant mais sont conservées pour être additionnées globalement;
- des additionneurs à retenue anticipée, dans lesquels on prévoit la valeur de la retenue en fonction des entrées au lieu d'attendre sa propagation;
- des additionneurs interconnectés entre eux selon un schéma particulier tel que l'arbre de Wallace pour regrouper progressivement les produits partiels trois par trois.

Indépendamment de la réduction du temps d'addition, on peut aussi réduire le nombre de produits partiels à additionner grâce à un décodage approprié des bits du multiplicateur. L'algorithme de Booth et ses variantes permettent de ne générer que $(n+1)/2$ produits partiels au lieu de $n$ pour un multiplicateur à $n$ chiffres, chacun de ces produits partiels ayant quatre ou cinq valeurs possibles qui sont 0, X, $-$X, 2X et éventuellement $-$2X, X étant le multiplicande. Mais ce genre de manipulation augmente la complexité du circuit, donc son encombrement.

La présente invention vise à réaliser un multiplieur présentant un meilleur compromis entre d'une part la vitesse de fonctionnement et d'autre part la complexité et l'encombrement du circuit. Elle met en œuvre un traitement de signal tel que $(n+1)/2$ produits partiels seulement soient générés, ces produits partiels ne pouvant prendre chacun que trois valeurs, 0, X ou $-$X (X étant le multiplicande), tel que cela est expliqué dans le livre de K. HWANG «Computer arithmetic principles, architecture, and design» 1979, pages 149–151, J. Wiley and Sons, New York, US. Ces produits partiels sont additionnés deux à deux par une addition sans propagation de retenue, ce qui est très important car la propagation d'une retenue entre les additionneurs élémentaires d'un étage additionneur à n bits consomme un temps d'autant plus long que n est plus grand.

Le multiplieur binaire selon l'invention, destiné à recevoir sous forme de signaux électriques logiques un premier nombre binaire dit multiplicande X et un second nombre binaire dit multiplicateur Y, pour fournir leur produit sous forme de signaux électriques logiques, comprend un codeur pour convertir les signaux binaires représentant les n chiffres $y_j$ ($y_j$ = 0 ou 1) du multiplicateur Y en un ensemble de signaux logiques représentant n coefficients $b_j$ (j = 0 à n$-$1) affectant chacune des puissances successives de 2 du nombre binaire Y exprimé sous forme de la somme algébrique suivante:

$$Y = b_{n-1}2^{n-1} + b_{n-2}2^{n-2} + \ldots\ldots\ldots + b_1 2^1 + b_0$$

où les coefficients $b_j$ peuvent prendre les valeurs 0, 1 ou $-$1 exclusivement, et où le produit de deux coefficients consécutifs $b_j$ et $b_{j-1}$ est obligatoirement nul.

Le multiplieur comprend aussi, pour aboutir à une amélioration du compromis vitesse/encombrement, un codeur pour convertir de la même manière les signaux binaires représentant les m chiffres $x_i$ ($x_i$ = 0 ou 1) du multiplicande X en un ensemble de signaux logiques représentant m coefficients $a_i$ (i = 0 à m$-$1) affectant chacune des puissances successives de 2 du nombre X exprimé sous forme de la somme algébrique suivante:

$$X = a_{m-1}2^{m-1} + a_{m-2}2^{m-2} + \ldots\ldots\ldots + a_1 2^1 + a_0$$

où les coefficients $a_i$ peuvent prendre les valeurs 0, 1 ou $-$1 exclusivement, et où le produit de deux coefficients consécutifs $a_i$ et $a_{i-1}$ est obligatoirement nul.

La théorie montre que ce codage des coefficients $x_i$ ou $y_j$ en coefficients $a_i$ et $b_j$ ayant les propriétés indiquées est possible et est même unique.

Les coefficients $a_i$ et $b_j$, ayant trois valeurs possibles 0, 1 ou $-$1, sont représentés de préférence chacun par un couple de signaux logiques binaires, les codeurs fournissant donc, à partir des m ou n chiffres binaires du multiplicande et du multiplicateur, m ou n couples de signaux logiques binaires.

Ce sont ces couples de signaux logiques codés qui subiront notamment des opérations logiques d'addition et de décalage nécessaires à l'accomplissement de la multiplication.

Le multiplieur selon l'invention pourra comporter au moins un étage additionneur constitué par une série d'additionneurs élémentaires recevant chacun deux couples de signaux logiques codés issus du codeur du multiplicande et fournissant chacun une somme et une retenue codées de la même manière que les couples, les additionneurs élémentaires successifs de la série étant interconnectés et agencés de manière à fonctionner tous simultanément sans attendre la propagation d'une retenue entre les premiers et les derniers additionneurs élémentaires de la série; autrement dit, les additionneurs élémentaires de cet étage, s'ils comportent une entrée de retenue, sont agencés de telle manière que la retenue de l'addition qu'ils effectuent ne dépend pas de la retenue appliquée à l'entrée de retenue.

D'autres caractéristiques et avantages de l'invention apparaîtront à la lecture de la description détaillée qui suit et qui est faite en référence aux dessins annexés dans lesquels:

– la figure 1 représente un schéma-bloc d'un multiplieur 4 bits par 4 bits selon l'invention;

– la figure 2 représente un détail de circuit utile dans le multiplieur;

– la figure 3 représente un motif élémentaire du circuit de génération et décalage de produits partiels nécessaire à la réalisation de la multiplication;

– la figure 4 représente un détail du circuit de génération et décalage de produits partiels, ce détail concernant les bits de plus faible poids des produits partiels;

– la figure 5 représente le schéma de l'étage additionneur de produits partiels;

– la figure 6 représente le schéma d'un additionneur élémentaire sans entrée de retenue capable d'additionner deux chiffres de valeur 0, 1 ou −1 codés chacun sur deux niveaux logiques, et de fournir une somme et une retenue codées de la même manière;

– la figure 7 représente un schéma de codeur du multiplicande (ou du multiplicateur);

– la figure 8 représente un schéma de décodeur permettant de reconvertir le résultat de la multiplication en binaire.

Le multiplieur selon l'invention va être décrit progressivement dans ses divers éléments, essentiellement pour une multiplication d'un multiplicande de 4 bits par un multiplicateur de 4 bits; on indiquera aux endroits appropriés comment généraliser. On considérera qu'on travaille avec des nombres binaires d'entrée signés, codés en complément à deux, donc pouvant s'écrire sous la forme:

– pour le multiplicande:
$$X = -x_3 \cdot 2^3 + x_2 \cdot 2^2 + x_1 \cdot 2^1 + x_0$$

– pour le multiplicateur:
$$Y = y_3 \cdot 2^3 + y_2 \cdot 2^2 + y_1 \cdot 2^1 + y_0$$

Le bit de poids supérieur est un bit de signe (0 = nombre positif; 1 = nombre négatif).

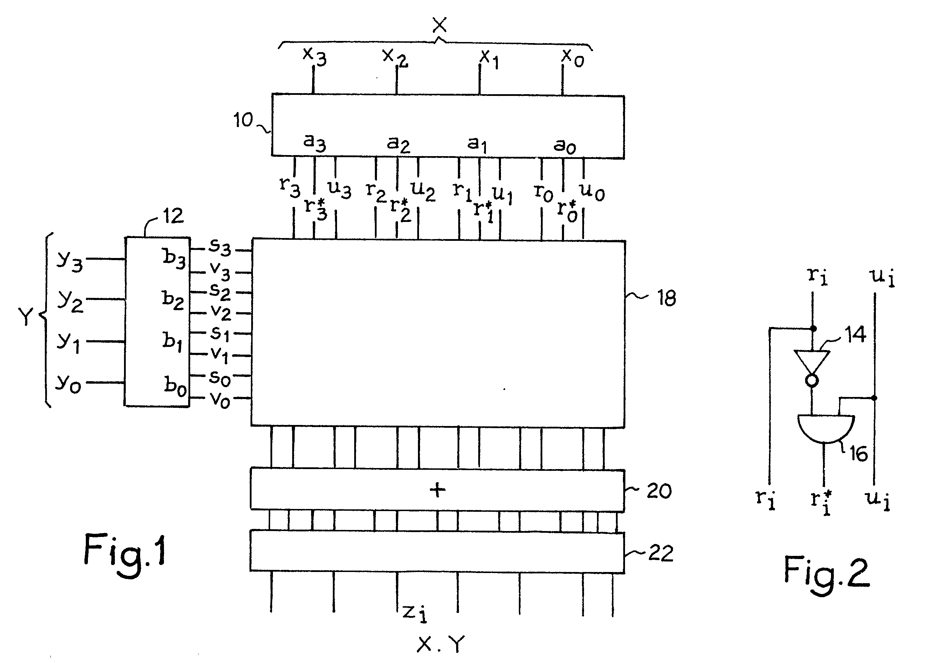

Dans la réalisation préférentielle de l'invention, dont le schéma-bloc est donné à la figure 1, chacun de ces deux nombres, représenté par des signaux logiques binaires de même appellation $x_0$ à $x_3$, $y_0$ à $y_3$ que les chiffres qu'ils représentent, est appliqué à un codeur respectif, 10 pour le multiplicande X, 12 pour le multiplicateur Y.

Le codeur 12 reçoit quatre niveaux logiques d'entrée correspondant aux chiffres binaires $y_0$, $y_1$, $y_2$, $y_3$ du multiplicateur Y, et les convertit en quatre couples de signaux logiques de sortie $(s_0, v_0)$, $(s_1, v_1)$, $(s_2, v_2)$, $(s_3, v_3)$, représentant chacun un coefficient $b_0$, $b_1$, $b_2$, $b_3$ respectivement, où:

$$Y = b_3 \cdot 2^3 + b_2 \cdot 2^2 + b_1 \cdot 2^1 + b_0$$

et où les coefficients $b_j$ ont les propriétés indiquées ci-dessus, à savoir qu'ils ne peuvent prendre que trois valeurs 0, 1 et −1 et que le produit de deux coefficients consécutifs $b_j$ et $b_{j-1}$ est nul, c'est-à-dire qu'on ne peut avoir deux coefficients non nuls consécutifs.

La correspondance entre la valeur du coefficient et les niveaux logiques des couples de signaux de sortie du codeur est la suivante:

| si | $b_j =$ | 0 | alors | $s_j = 0$ | $v_j = 0$ |
|----|---------|---|-------|-----------|-----------|
|    | $b_j =$ | 1 |       | $s_j = 0$ | $v_j = 1$ |
|    | $b_j =$ | −1 |      | $s_j = 1$ | $v_j = 1$ |

La combinaison $s_j = 1$, $V_j = 0$ est interdite et ne peut apparaître en sortie du codeur. Le codage de correspondance entre les valeurs 0, 1 et −1, et les couples $(s_j, v_j)$ pourrait être différent de celui qui est choisi ici.

Le codeur 12 fournit donc le multiplicateur Y sous cette forme codée où $v_j$ représente une valeur absolue 0 ou 1 d'un coefficient d'une puissance de 2 et où $s_j$ représente le signe de ce coefficient.

La multiplication consiste normalement à prendre les coefficients $b_j$ du multiplicateur et à faire le produit de chacun de ces coefficients par le multiplicande pour obtenir des produits partiels qui seront ajoutés les uns aux autres avec des décalages appropriés.

Si $b_j =$ 0 le produit partiel est 0
Si $b_j =$ 1 le produit partiel est X (multiplicande)
Si $b_j =$ −1 le produit partiel est −X

Le multiplicande X est lui-même codé par le codeur 10 qui transforme, exactement comme le codeur 12, ses quatre niveaux logiques d'entrée, correspondant aux chiffres binaires, $x_0$, $x_1$, $x_2$, $x_3$, en quatre couples de signaux logiques de sortie, $(r_0, u_0)$, $(r_1, u_1)$, $(r_2, u_2)$, $(r_3, u_3)$ représentant chacun un coefficient $a_0$, $a_1$, $a_2$, $a_3$ respectivement, où:

$$X = a_3 \cdot 2^3 + a_2 \cdot 2^2 + a_1 \cdot 2^1 + a_0$$

et où les coefficients $a_i$ ont les mêmes propriétés que les coefficients $b_j$ et sont codés par les signaux $(r_i, u_i)$ de la même manière que les signaux $b_j$ sont codés par les signaux $(s_j, v_j)$, c'est-à-dire que:

| si | $a_i =$ | 0 | alors | $r_i = 0$ | $u_i = 0$ |
|----|---------|---|-------|-----------|-----------|
|    | $a_i =$ | 1 |       | $r_i = 0$ | $u_i = 1$ |
|    | $a_i =$ | −1 |      | $r_i = 1$ | $u_i = 1$ |

La combinaison $r_i = 1$, $u_i = 0$ est interdite et ne peut apparaître en sortie du codeur 10.

Le codeur 10 fournit donc le multiplicande X sous cette forme codée où $u_i$ représente une valeur absolue 0 ou 1 d'un coefficient d'une puissance de deux et $r_i$ représente le signe de ce coefficient (0 = positif; 1 = négatif).

Le code de correspondance entre les valeurs 0, 1 et −1 et les deux niveaux logiques ($r_i$, $u_i$) pourrait aussi être différent.

Mais de plus, à la différence du codeur 12, et du fait que le codeur 10 du multiplicande est destiné en fait à engendrer des produits partiels et que ces produits partiels pourront prendre les valeurs 0, X ou −X avec le codage expliqué ci-dessus, on prévoit de préférence que le codeur 10 est capable de fournir à sa sortie à la fois X et −X, c'est-à-dire à la fois les valeurs $a_i$ et leur opposé −$a_i$.

Ceci est obtenu très simplement en prévoyant, à l'intérieur du codeur 10 ou en dehors, un inverseur fournissant en outre le complément $r_i^*$ de $r_i$, complément qui est toutefois forcé à zéro si $u_i = 0$ pour ne pas aboutir à la combinaison interdite ($r_i = 1$, $u_i = 0$).

La figure 1 montre donc, en sortie du codeur 10 du multiplicande, non pas des couples de signaux de sortie ($r_i$, $u_i$) mais des triplets ($r_i$, $r_i^*$, $u_i$) représentant en fait deux couples possibles ($r_i$, $u_i$) = $a_i$ et ($r_i^*$, $u_i$) = −$a_i$.

La figure 2 montre un schéma logique très simple avec un inverseur 14 et une porte ET 16 d'inhibition pour produire le triplet ($r_i$, $r_i^*$, $u_i$) à partir du couple ($r_i$, $u_i$), avec l'inhibition de la combinaison interdite $r_i^*$, $u_i = 1$, 0.

Revenant à la figure 1, les triplets ($r_i$, $r_i^*$, $u_i$) sont appliqués comme signaux d'entrée à un circuit logique d'aiguillage 18 qui est commandé par les quatre couples ($s_j$, $v_j$) du codeur 12 pour diriger les différents signaux d'entrée ($r_0$ à $r_3$, $r_0^*$ à $r_3^*$, $u_0$ à $u_3$) sur des sorties bien définies en fonction des valeurs des quatre couples de commande ($s_j$, $v_j$) issus du codeur 12.

En fait, le circuit d'aiguillage 18 a une fonction de génération de produits partiels 0, X ou −X et de décalage approprié de ces produits partiels avant leur addition.

Les sorties du circuit d'aiguillage 18 sont appliquées aux différentes entrées d'un étage additionneur 20 pour effectuer des additions de produits partiels bien déterminés en fonction des couples de commande ($s_j$, $v_j$) et obtenir en sortie un résultat de multiplication sous forme codée. Un décodeur 22 peut être placé en sortie de l'étage additionneur 20 pour reconvertir les couples de signaux de sortie de l'étage additionneur en code binaire, selon un code inverse de celui par lequel on est passé des valeurs $x_0$, $x_1$, $x_2$, $x_3$ aux valeurs ($r_0$, $u_0$), ($r_1$, $u_1$), ($r_2$, $u_2$), ($r_3$, $u_3$).

On fait ici une parenthèse pour indiquer que si le multiplicateur avait plus de quatre bits, par exemple huit ou seize, il faudrait grouper ceux-ci par quatre et prévoir un circuit d'aiguillage et un étage additionneur pour chaque groupe de quatre. Les sorties de ces additionneurs reconverties ou non en binaire devraient elles-mêmes être additionnées deux à deux avec des décalages appropriés dans un deuxième étage puis éventuellement dans un troisième, etc., jusqu'à obtention d'un résultat de sortie d'un additionneur unique final, résultat qui est reconverti en code binaire s'il y a lieu. Au contraire, le la structure de la figure 1 mais nécessite seulement que le codeur 10, le circuit d'aiguillage 18, et l'additionneur 20 aient un plus grand nombre d'entrées et de sorties.

Avant de décrire le détail des codeurs 10, 12 du circuit d'aiguillage 18, et de l'additionneur 20, on va expliquer sur un exemple numérique la formation des produits partiels et de leur addition dans le cas où le multiplicateur Y a quatre bits; le multiplicande X a ici aussi quatre bits mais ce dernier point n'a pas d'importance pour la compréhension du fonctionnement, la généralisation à m bits étant immédiate.

Les nombres binaires d'entrée sont pris avec la convention dite «complément à 2»; ce sont donc des nombres signés où le bit de poids fort est un bit de signe.

Soit à multiplier X = 1011 (−5 en décimal) par Y = 0110 (+6 en décimal)

On peut montrer que la manière unique d'écrire X et Y à l'aide des coefficients $a_i$ et $b_i$ ayant les propriétés indiquées est ici:

$$X = -2^2 - 2^0 \text{ soit } (a_3, a_2, a_1, a_0) = (0, -1, 0, -1)$$
$$Y = 2^3 - 2^1 \text{ soit } (b_3, b_2, b_1, b_0) = (1, 0, -1, 0)$$

Le codeur 10 fournit ici les couples de niveaux logiques suivants:

| | |
|---|---|
| $r_3$, $u_3 = 00$ | ($a_3 = \quad 0$) |
| $r_2$, $u_2 = 11$ | ($a_2 = -1$) |
| $r_1$, $u_1 = 00$ | ($a_1 = \quad 0$) |
| $r_0$, $u_0 = 11$ | ($a_0 = -1$) |

ainsi d'ailleurs que les couples opposés:

| | |
|---|---|
| $r_3^*$, $u_3 = 00$ | ($-a_3 = 0$) |
| $r_2^*$, $u_2 = 01$ | ($-a_2 = 1$) |
| $r_1^*$, $u_1 = 00$ | ($-a_1 = 0$) |
| $r_0^*$, $u_0 = 01$ | ($-a_0 = 1$) |

Le codeur 12 fournit les couples de niveaux logiques suivants:

| | |
|---|---|
| $s_3$, $v_3 = 01$ | ($b_3 = \quad 1$) |
| $s_2$, $v_2 = 00$ | ($b_2 = \quad 0$) |
| $s_1$, $v_1 = 11$ | ($b_1 = -1$) |
| $s_0$, $v_0 = 00$ | ($b_0 = \quad 0$) |

La multiplication de X par Y peut s'écrire comme une multiplication classique à quatre chiffres, mais ici certains chiffres peuvent être négatifs:

```
                    0    −1     0    −1
                    1     0    −1     0
                 ───────────────────────
                    0     0     0     0
              0  −(−1)    0  −(−1)
          0     0     0     0
      0  −1     0    −1
      ─────────────────────────────────
  0  −1     0     0     0     1     0
```

Le résultat est 0, −1, 0, 0, 0, 1, 0, soit $-2^5 + 2^1 = -30$.

Les quatre produits partiels écrits successivement sont respectivement 0, −X, 0, X (dans l'ordre des poids croissants). Deux produits partiels seulement sur les quatre ne sont pas nuls et contribuent au résultat final.

Ceci résulte des propriétés du codage particulier utilisé pour obtenir les coefficients $b_j$ du multiplicateur: on ne peut avoir deux coefficients $b_j$ consécutifs non nuls.

C'est la raison pour laquelle, pour un multiplicateur à plus de quatre bits, on groupe ces bits quatre par quatre pour produire à chaque fois seulement deux produits partiels non nuls qui sont additionnés avec un décalage approprié.

Les additions se font par colonnes de chiffres, c'est-à-dire que l'étage additionneur 20 comporte essentiellement autant d'additionneurs élémentaires qu'il y a de colonnes possibles soit $m+3$ si le multiplicande a m chiffres, en pratique $m+1$ additionneurs seulement comme on le verra.

Chaque additionneur élémentaire peut recevoir sur une première entrée (en réalité sur un premier couple d'entrées) un premier chiffre venant du premier ou du second produit partiel et sur une seconde entrée (en réalité sur un second couple d'entrées) un second chiffre venant du troisième ou du quatrième produit partiel.

C'est le circuit d'aiguillage 18 qui se charge d'aiguiller les chiffres $a_i$ du multiplicande, vers les entrées appropriées des additionneurs élémentaires qui doivent les recevoir, ceci en fonction des valeurs des coefficients $b_j$ du multiplicateur, donc en fonction des sorties du codeur 12. Le circuit d'aiguillage 18 se charge aussi d'inverser la valeur de $a_i$ lorsqu'un produit partiel à réaliser est −X, ou d'annuler $a_i$ lorsque le produit partiel est 0. Enfin il se charge d'effectuer le décalage approprié des chiffres des produits partiels à additionner.

De manière générale, un additionneur élémentaire de rang i doit effectuer la somme:

$$a_i \cdot b_0 + a_{i-1} \cdot b_1 + a_{i-2} \cdot b_2 + a_{i-3} \cdot b_3$$

On affecte à une entrée de l'additionneur les valeurs $a_i \cdot b_0$ et $a_{i-1} \cdot b_1$ (l'une des deux est obligatoirement nulle) et à l'autre entrée les valeurs $a_{i-2} \cdot b_2$ et $a_{i-3} \cdot b_3$ (l'une des deux est aussi obligatoirement nulle).

Ainsi l'additionneur reçoit sur sa première entrée:

| | |
|---|---|
| 0 | si $b_0$ et $b_1$ sont tous deux nuls |
| $a_i$ | si $b_0 = 1$ |
| $-a_i$ | si $b_0 = -1$ |
| $a_{i-1}$ | si $b_1 = 1$ |
| $-a_{i-1}$ | si $b_1 = -1$ |

Il reçoit sur sa deuxième entrée:

| | |
|---|---|
| 0 | si $b_2$ et $b_3$ sont tous deux nuls |
| $a_{i-2}$ | si $b_2 = 1$ |
| $-a_{i-2}$ | si $b_2 = -1$ |
| $a_{i-3}$ | si $b_3 = 1$ |
| $-a_{i-3}$ | si $b_3 = -1$ |

Les autres combinaisons sont impossibles.

Les coefficients du type $a_{i-k}$ sont bien entendu considérés comme nuls si i–k est négatif.

Le tableau logique qui précède permet de définir complètement la fonction logique du circuit d'aiguillage 18, en n'oubliant pas que chaque coefficient $a_i$ ou $b_j$ est codé sous forme de deux signaux logiques binaires.

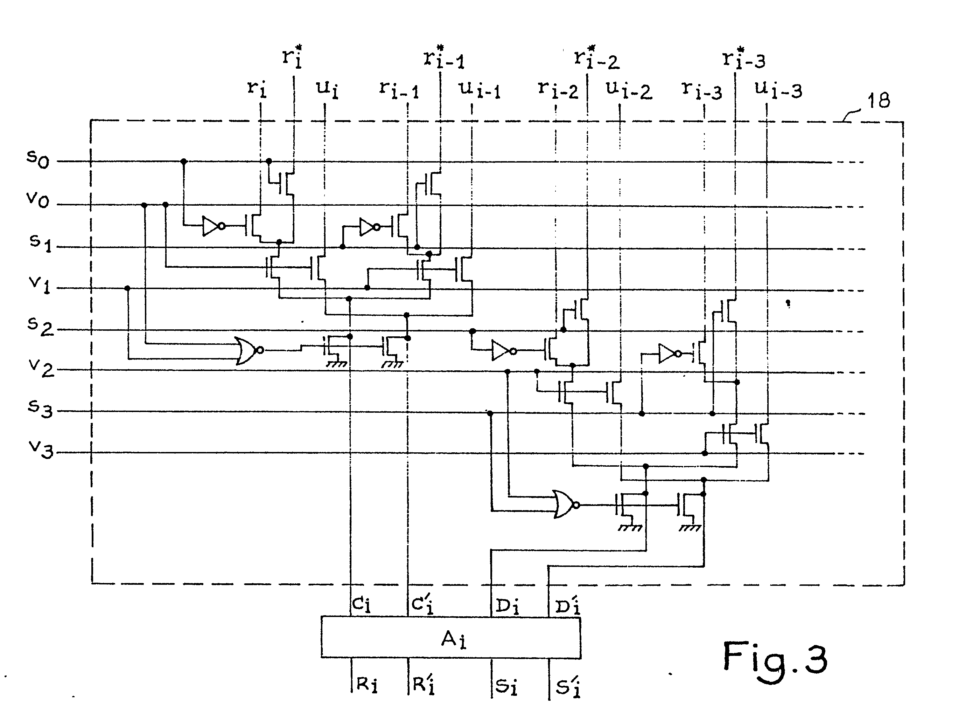

La figure 3 montre un schéma partiel du circuit d'aiguillage avec un ensemble d'interrupteurs (transistors MOS), portes logiques NI et inverseurs permettant d'amener aux entrées d'un additionneur élémentaire $A_i$ de rang i les couples coefficients désirés, avec les signes désirés, en fonction des signaux $(s_j, v_j)$ représentant les coefficients $b_j$.

L'additionneur $A_i$ possède un premier couple d'entrées $C_i$, $C'_i$ pour recevoir un couple de signaux binaires constituant le premier terme de l'addition (c'est-à-dire 0 ou $a_i$ ou $-a_i$ ou $a_{i-1}$ ou $-a_{i-1}$ selon les cas) et un second couple d'entrées $D_i$, $D'_i$ pour recevoir le second terme (c'est-à-dire 0 ou $a_{i-2}$ ou $-a_{i-2}$ ou $a_{i-3}$ ou $-a_{i-3}$ selon les cas).

Il comprend un premier couple de sorties $S_i$, $S'_i$ pour fournir la somme des deux termes de l'addition, avec le même codage que les coefficients $a_i$ et $b_j$, c'est-à-dire que si la somme est égale à 0, 1 ou −1, le premier couple de sorties fournit des couples de niveaux 00, 01 ou 11; l'additionneur comprend enfin un second couple de sorties $R_i$, $R'_i$ pour fournir la retenue de l'addition; en effet cette retenue est différente de zéro dans le cas de l'addition 1+1 (retenue = 1) ou (−1) + (−1) (retenue = −1). Cette retenue a donc trois valeurs possibles et est encore exprimée avec le même codage que les coefficients $a_i$ et $b_j$.

Sans décrire entièrement le schéma de la figure 3, qui est suffisamment clair pour sa compréhension par un homme du métier, on voit qu'il réalise exactement les fonctions d'aiguillage suivantes:

1°/ si $v_0 = 0$, la transmission des niveaux $(r_i, u_i)$ ou $(r_i^*, u_i)$ aux entrées $C_i$, $C'_i$ est interdite par deux transistors MOS commandés par $v_0$; sinon elle est autorisée, $r_i$ ou $r_i^*$ étant transmis selon que $s_0 = 0$ ou $s_0 = 1$ grâce à deux transistors MOS et un inverseur;

2°/ si $v_1 = 0$, la transmission des niveaux $r_{i-1}$, $u_{i-1}$ ou $r_{i-1}^*$, $u_{i-1}$ aux entrées $C_i$, $C'_i$ est interdite par deux autres transistors MOS commandés par $v_1$, sinon elle est autorisée, et deux transistors MOS et un inverseur commandés par $s_1$ permettent de choisir de transmettre $r_{i-1}$ ou $r_{i-1}^*$ selon que $s_1 = 0$ ou $s_1 = 1$.

3°/ si $v_0$ et $v_1$ sont tous deux nuls, non seulement les transmissions sont interdites mais $C_i$ et $C'_i$ sont forcés tous deux à un niveau logique 0 par deux transistors commandés par une porte NI recevant à la fois $v_0$ et $v_1$.

4° / le même circuit de base est utilisé pour la transmission de $r_{i-2}$, $r^*_{i-2}$, $u_{i-2}$ ou $r_{i-3}$, $r_i^*{}_{-3}$ aux entrées $D_i$, $D'_i$, les aiguillages étant faits sous la commande de $v_2$, $v_3$ et $s_2$, $s_3$ au lieu de $v_0$, $v_1$, $s_0$, $s_1$ respectivement.

Le schéma de la figure 3 ne représente qu'un motif qu'il faut répéter autant de fois qu'il y a d'additionneurs donc théoriquement $m+3$ fois pour un multiplicande à m bits multiplié par un groupe de quatre bits du multiplicateur. En fait il n'y a pas d'additionneurs de rang 0 et 1; le circuit d'aiguillage fournit directement, pour ces deux rangs, les sommes de chiffres de produits partiels, car ces sommes se réduisent à un seul terme.

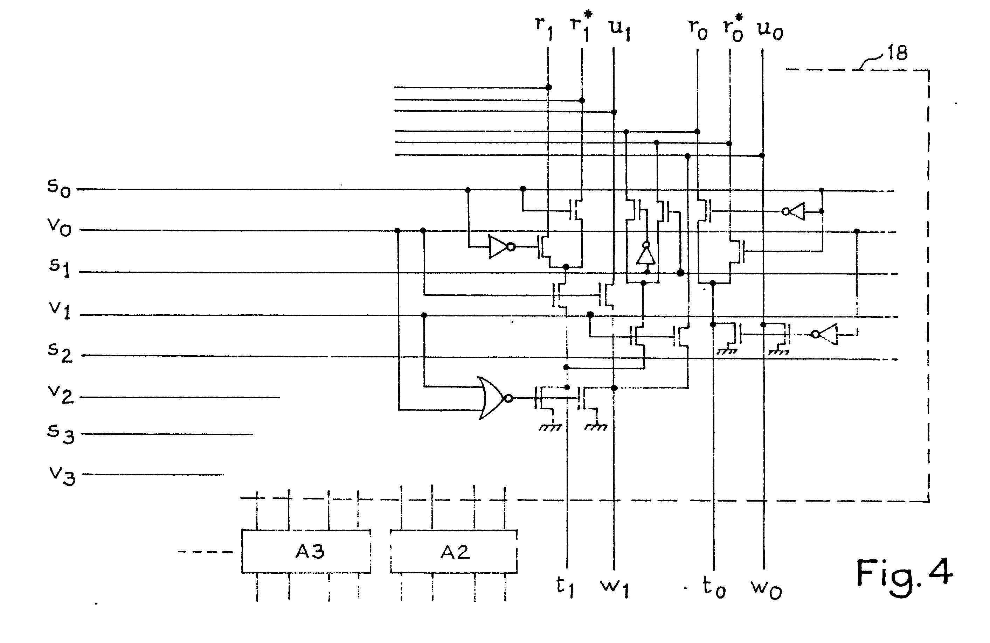

La figure 4 montre un exemple de réalisation de la partie du circuit d'aiguillage concernant les sommes de chiffres de produits partiels de rang 0 et 1; cette partie de circuit n'est d'ailleurs qu'une simplification du circuit de la figure 3 tenant compte de ce que pour $i = 1$ et $i = 0$, $a_{i-3}$, $a_{i-2}$ et éventuellement $a_{i-1}$ doivent être considérés comme nuls;

– pour le rang 0, le produit partiel unique à transmettre, comme chiffre de rang zéro dans le résultat de la multiplication, est $a_0 \cdot b_0$ donc soit 0 si $b_0 = 0$ (c'est-à-dire en pratique si $v_0 = 0$), soit $a_0$ $(r_0, u_0)$ si $b_0 = 1$ (c'est-à-dire si $s_0 = 0$ et $v_0 = 1$), soit enfin $-a_0$, c'est-à-dire $(r_0^*, u_0)$, si $s_0 = 1$ et $v_0 = 1$. La partie de circuit logique d'aiguillage représentée à la figure 4 fournit un couple de signaux $t_0$, $w_0$ représentant $a_0 \cdot b_0$ avec le même codage, en deux niveaux logiques, que les coefficients $a_i$ et $b_j$;

– pour le rang 1, un seul produit partiel est non nul mais il peut s'agir soit de $a_0 \cdot b_1$ si $b_0 = 0$, soit de $a_1 \cdot b_0$ si $b_1$ est nul; le circuit de la figure 4 établit donc aussi deux signaux $t_1$, $w_1$ représentant soit $a_0 \cdot b_1$ soit $a_1 \cdot b_0$ selon le cas qui se présente, toujours avec le même codage;

$t_0$, $w_0$ et $t_1$, $w_1$ représentent les valeurs (0, +1 ou −1) des deux chiffres de poids le plus faible du résultat de la multiplication par quatre bits.

Les autres chiffres $t_i$, $w_i$ sont établis à partir des additionneurs élémentaires $A_2$, $A_3$ etc. recevant les sorties du circuit d'aiguillage 18.

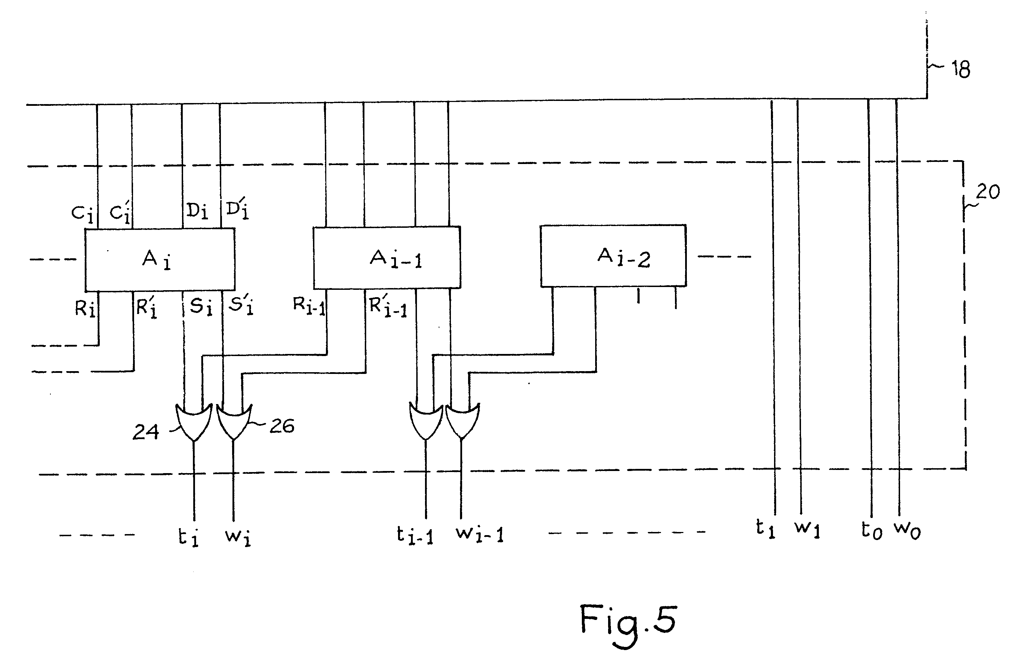

Le schéma bloc de la figure 5 représente l'étage additionneur 20 constitué essentiellement des additionneurs élémentaires $A_2$ à $A_{m+2}$ ayant chacun deux couples d'entrée $C_i$, $C'_i$ et $D_i$, $D'_i$ et un couple de sorties «somme» $S_i$, $S'_i$ et un couple de sorties «retenue» $R_i$, $R'_i$. Somme et retenue sont codés sur deux niveaux logiques comme tous les autres coefficients susceptibles de prendre les trois valeurs 0, 1, −1.

Ici, il faut faire une remarque très importante: du fait que le multiplicande est codé par des coefficients $a_i$ tels que $a_i$ et $a_{i-1}$ ne peuvent être tous deux non nuls, les produits partiels de la multiplication, produits qui sont transmis aux additionneurs élémentaires, présentent la même propriété.

Ainsi, si par hasard dans une même colonne de chiffres à additionner on a deux chiffres 1 ou deux chiffres −1, on peut être sûr que chacun de ces chiffres a à sa droite et à sa gauche un zéro, donc que:

1° / l'addition en question ne sera pas perturbée par une retenue de l'addition de rang inférieur,

2° / cette addition donnera lieu elle-même à une retenue 1 ou −1 qui devra être rajoutée au résultat de l'addition de rang supérieur; mais comme cette dernière ne comporte qu'une addition de zéros, son résultat sera égal à la retenue 1 ou −1 mais ne donnera pas lieu à une nouvelle retenue.

Il n'y a donc aucun cas où la retenue puisse se propager sur plusieurs additionneurs successifs comme c'est le cas dans les additions normales.

C'est pourquoi on prévoit un agencement et une interconnexion des additionneurs élémentaires tels que tous les additionneurs puissent travailler simultanément sans avoir à attendre la retenue de l'addition de rang précédent. Cette retenue est simplement rajoutée en sortie des additionneurs par une porte logique qui tient compte des différents cas où une retenue peut apparaître.

Les additionneurs élémentaires $A_i$ sont ici des «demi-additionneurs», en ce sens que s'ils produisent bien chacun une somme et une retenue, ils ne possèdent pourtant pas une entrée de retenue de l'étage précédent qui serait susceptible de modifier leur propre résultat de retenue.

On voit sur la figure 5 qu'on a prévu deux portes OU 24 et 26 pour chaque additionneur $A_i$. La porte 24 reçoit la sortie $S_i$ de l'additionneur $A_i$ et la sortie $R_i$ de l'additionneur $A_{i-1}$. La porte 26 reçoit les sorties $S'_i$ et $R'_{i-1}$. Les portes 24 et 26 fournissent les niveaux logiques $t_i$, $w_i$ représentant le résultat global de l'opération, à savoir la valeur du chiffre de rang i du résultat de la multiplication.

Pour l'additionneur $A_2$, ces portes OU sont inutiles car il n'y a pas de retenue précédente.

On vérifie qu'avec ces portes OU:

– d'une part la retenue d'un additionneur ne peut pas être affectée par la retenue de l'étage précédent;

– d'autre part, si la retenue de l'additionneur $A_{i-1}$ est 00, alors la somme 00 ou 01 ou 11 fournie par l'additionneur $A_i$ n'est pas modifiée par son passage à travers les portes OU;

– enfin, si la retenue de l'additionneur $A_{i-1}$ est 01 ou 11, c'est que l'additionneur $A_i$ ne doit recevoir que des zéros et fournir sur ses sorties «somme» un couple de niveaux 00 qui ne modifie pas le passage à travers la porte OU de la retenue 01 ou 11.

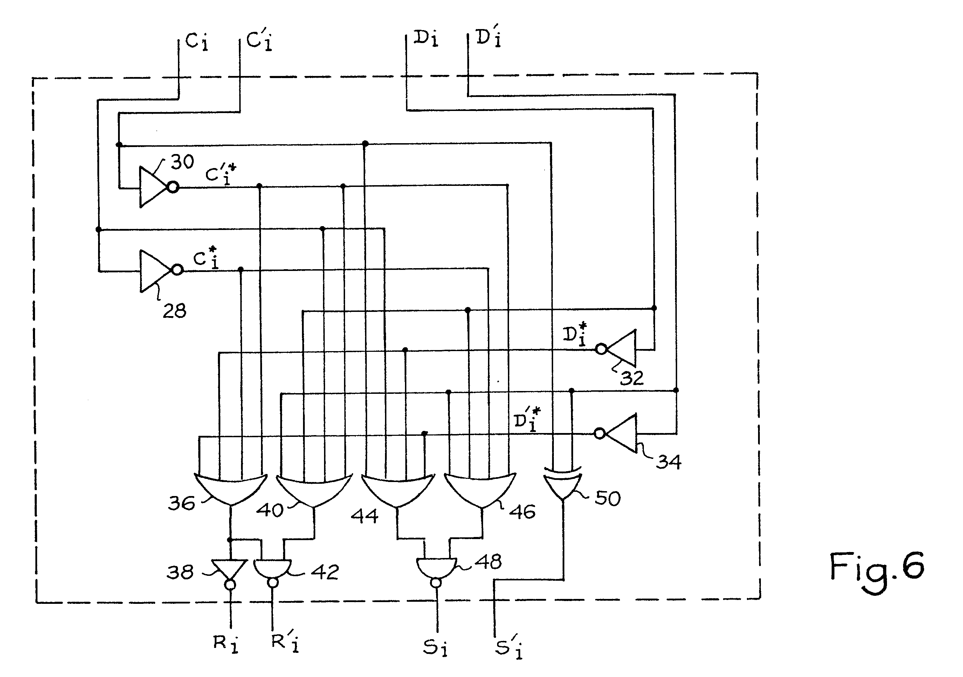

La figure 6 montre un exemple de schéma détaillé d'additionneur élémentaire $A_i$. Cet additionneur doit fournir un résultat, somme et retenue, correspondant à l'addition de deux nombres pouvant prendre seulement les valeurs 0, 1 et −1. Il doit respecter les égalités suivantes:

| | | | | | | |
|---|---|---|---|---|---|---|
| | | $0 +$ | $0$ | =somme | $0$, retenue | $0$ |
| $0+1$ | ou | $1 +$ | $0$ | =somme | $1$, retenue | $0$ |
| $0+(-1)$ | ou | $(-1) +$ | $0$ | =somme | $-1$, retenue | $0$ |
| $1+(-1)$ | ou | $(-1) +$ | $1$ | =somme | $0$, retenue | $0$ |
| | | $1 +$ | $1$ | =somme | $0$, retenue | $1$ |
| | | $(-1) +$ | $(-1)$ | =somme | $0$, retenue | $-1$ |

Ces égalités définissent les fonctions logiques à réaliser, lorsque les nombres 0, 1 et −1 sont représentés par des couples de niveaux logiques 00, 01 ou 11 aussi bien aux entrées qu'aux sorties de l'additionneur.

Un schéma logique correspondant est représenté à la figure 6. Les dénominations des entrées et sorties sont celles des figures 4 et 5.

L'additionneur élémentaire $A_i$ comporte:

– quatre inverseurs 28, 30, 32, 34 pour produire les compléments logiques $C_i^*$, $C'_i^*$, $D_i^*$, $D'_i^*$ des niveaux sur les entrées $C_i$, $C'_i$, $D_i$, $D'_i$.

– une porte ou 36 à quatre entrées recevant les signaux $C_i^*$, $C'_i^*$, $D_i^*$, $D'_i^*$ et suivie d'un inverseur fournissant sur la sortie $R_i$ le signe de la retenue de l'addition;

– une porte OU 40 recevant $C_i$, $C'_i$, $D_i$, $D'_i$ et une porte ET 42 recevant les sorties des portes OU 36 et 40; la sortie de la porte ET 42 fournit sur la sortie $R'_i$ la valeur absolue de la retenue;

– une porte OU 44 recevant $C_i$, $C'_i$, $D_i^*$, $D'_i^*$, une porte OU 46 recevant $C_i^*$, $C'_i^*$, $D_i$, $D'_i$ et une porte NON-ET 48 recevant les sorties des portes OU 44 et 46 et fournissant sur la sortie $S_i$ le signe de la somme effectuée;

– une porte OU-exclusif 50 recevant $C'_i$ et $D'_i$ et fournissant sur la sortie $S'_i$ la valeur absolue de la somme.

On va maintenant décrire le détail de l'un des codeurs 10 ou 12 qui ont pour rôle de trouver, à partir du nombre X ou Y appliqué sous forme binaire à une entrée du multiplieur, des coefficients $a_i$, $b_j$ à trois valeurs 0, 1, −1, les 1 ou −1 étant obligatoirement séparés par des zéros, et de coder ces coefficients sur deux niveaux logiques 00, 01 ou 11 en interdisant la combinaison 10.

Le codage des coefficients binaires $x_i$ (i = 0 à m−1) en coefficients ternaires $a_i$ se fait de la manière suivante, le nombre X étant écrit sous la forme dite «complément à deux» où le bit de poids le plus fort est un bit de signe.

On établit des signaux logiques intermédiaires $p_i$ et $q_i$ tels que:

$p_i$ est le résultat du OU-exclusif de $x_i$ et $x_{i-1}$ avec $p_0 = x_0$

$q_i$ est le produit logique de $p_i$ et du complément de $q_{i-1}$ avec $q_0 = x_0$

On écrit ensuite:

$a_i = (1-2x_{i+1})q_i$ avec $x_m = x_{m-1}$ (le nombre X n'ayant que m chiffres $x_0$ à $x_{m-1}$).

Tel est l'algorithme utilisé ici pour le calcul des coefficients $a_i$.

On a donc   $a_i = q_i$ si $x_{i+1} = 0$
et         $a_i = -q_i$ si $x_{i+1} = 1$

$q_i$ est un signal logique à deux niveaux possibles 0 ou 1; $a_i$ peut prendre trois valeurs 0, 1 ou −1 et est représenté par deux signaux binaires $r_i$ et $u_i$.

$r_i$ représente le signe de $a_i$. Si on choisit $r_i = 0$ pour un signe positif et $r_i = 1$ pour un signe négatif, on peut prendre $r_i = x_{i+1}$ puisque c'est pour $x_{i+1} = 1$ que $a_i = -q_i$ et pour $x_{i+1} = 0$ que $a_i = q_i$.

En fait on prendra $r_i = x_{i+1} \cdot q_i$ pour avoir quand même un signe positif si $q_i = 0$ (interdiction de la combinaison 1, 0 pour $r_i$, $u_i$).

$u_i$ représente la valeur absolue de $a_i$; $u_i$ est donc égal à $q_i$;

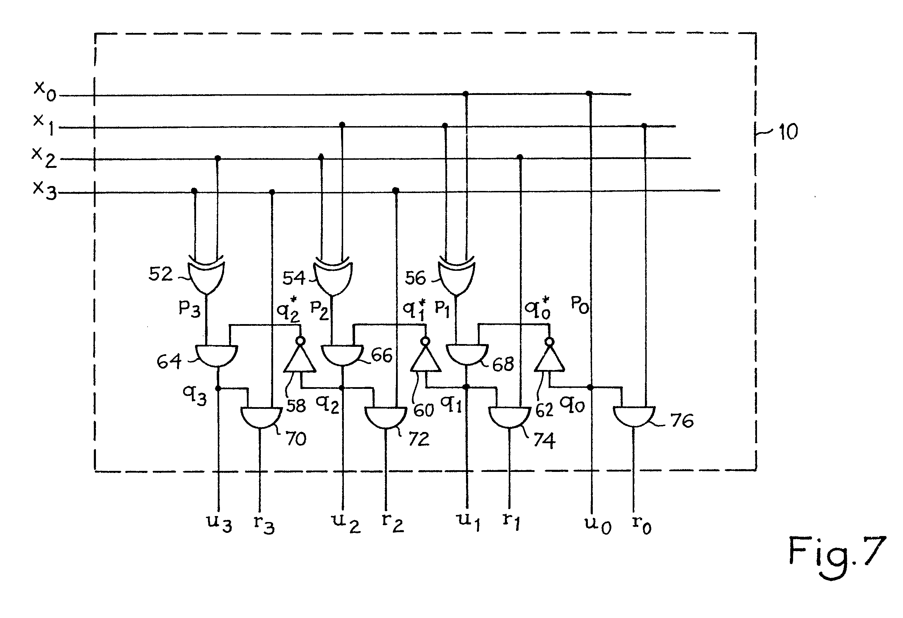

De ce qui précède découle la structure du circuit logique de codage représenté à la figure 7 pour quatre coefficients binaires d'entrée $x_0$ à $x_3$: trois portes OU-exclusif 52, 54, 56 établissent les niveaux $p_3$, $p_2$, $p_1$; $p_0$ est égal à $x_0$ de même que $q_0$ et $u_0$. Trois inverseurs 58, 60, 62 établissent à partir de $q_2$, $q_1$, $q_0$ les compléments $q_2^*$, $q_1^*$, $q_0^*$ de ces niveaux.

Trois portes ET à deux entrées 64, 66, 68 dont les sorties établissent des niveaux $q_3$, $q_2$, $q_1$ qui sont aussi les niveaux $u_3$, $u_2$, $u_1$, reçoivent chacune respectivement $p_3$ et $q_2^*$, $p_2$ et $q_1^*$, $p_1$ et $q_0^*$.

Enfin, quatre portes ET 70, 72, 74, 76 reçoivent respectivement $q_3$ et $x_3$, $q_2$ et $x_3$, $q_1$ et $x_2$, $q_0$ et $x_1$ et établissent respectivement les niveaux $r_3$, $r_2$, $r_1$, $r_0$.

Le codeur du multiplicateur est exactement le même: il suffit de remplacer ci-dessus les $x_i$ par des $y_j$ et les signaux $r_i$, $u_i$ par des signaux $s_j$, $v_j$.

Finalement, une fois que le résultat de la multiplication est obtenu sous forme de m + n − 1 coefficients $c_i$, représentés chacun par deux niveaux binaires $t_i$, $w_i$ tels que si $t_i$, $w_i$ = 0, 0, alors $c_i = 0$, si $t_i$, $w_i$ = 0, 1, alors $c_i = 1$ et si $t_i$, $w_i$ = 1, 1, alors $c_i = -1$, le résultat de la multiplication est:

$$Z = c_{m+n-2}2^{m+n-2} + \ldots\ldots c_i2^i + \ldots\ldots + c_0$$

Il est souhaitable de reconvertir des coefficients $c_i$ à trois valeurs possibles en coefficients binaires $z_i$ à deux valeurs 0, 1 avec:

$$Z = -z_{m+n-1}2^{m+n-1} + \ldots\ldots z_i2^i + \ldots\ldots + z_0$$

(expression du nombre Z en code binaire dit «complément à deux»).

Le décodage est en fait très simple: on sépare les coefficients $c_i$ positifs ou nuls ($t_i = 0$) des coefficients $c_i$ négatifs ou nuls ($t_i = 1$ ou $w_i = 0$).

La série de coefficients positifs correspond à un premier nombre positif en binaire.

La série des coefficients négatifs correspond à l'opposé d'un second nombre positif.

Le nombre Z s'écrit donc sous forme d'une soustraction de deux nombres binaires positifs.

On peut donc écrire chacun de ces nombres en «compléments à deux», en rajoutant un bit de signe de poids fort, et les additionner; pour le premier nombre, le bit de signe rajouté est 0; pour le second le bit de signe est 1 et le nombre en complément à deux correspondant est établi par complémentation des bits du second nombre et rajout d'une unité de poids le plus faible.

Les deux nombres écrits en «complément à deux» sont donc ajoutés pour donner le nombre Z en complément à deux.

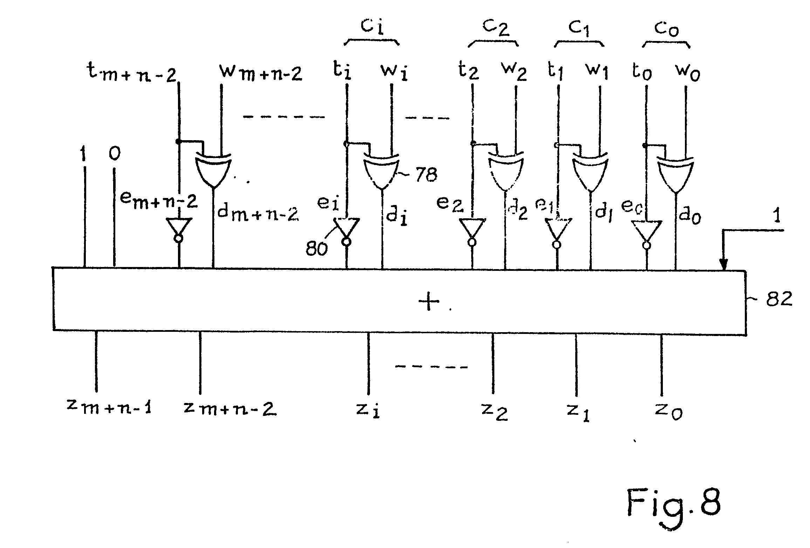

La figure 8 montre le circuit de décodage correspondant:

A partir de chaque coefficient $c_i$ on établit un coefficient binaire $d_i$ pour le nombre positif ($d_i = 0$ si $c_i$ est égal à 0 ou −1, $d_i = 1$ si $c_i = 1$); $d_i$ est

obtenu en sortie d'une porte OU-exclusif 78 recevant $t_i$ et $w_i$, c'est-à-dire le signe et la valeur absolue du coefficient $c_i$.

On établit aussi un coefficient $e_i$ pour le nombre négatif ($e_i = 0$ si $c_i = 0$ ou 1; $e_i = 1$ si $c_i = -1$); $e_i$ est tout simplement identique au bit de signe $t_i$ du coefficient $c_i$.

Un bit de signe 0 est adjoint au nombre positif et un bit de signe 1 au nombre négatif.

La somme du nombre positif et du nombre négatif est établie par addition bit à bit du coefficient $d_i$ et du complément du coefficient $e_i$ (établi par un inverseur 80) et en rajoutant une unité de poids le plus faible.

Cette addition est faite dans un additionneur binaire classique 82 à $m+n$ bits, ayant une entrée de retenue forcée à 1 (pour le rajout d'une unité de poids le plus faible), des entrées recevant les niveaux $d_i$ et des entrées recevant les compléments des niveaux $e_i$. De plus, le couple d'entrées de poids le plus fort reçoit 0, 1, c'est-à-dire les bits de signe respectifs du nombre positif et du nombre négatif.

Le résultat de l'addition est une série de niveaux logiques $z_0$ à $z_{m+n-1}$ représentant les coefficients binaires (en complément à deux) du résultat de la multiplication.

En fait on peut montrer que, compte-tenu des nombres de bits m et n du multiplicateur et du multiplicande, exprimés en complément à deux, le résultat de la multiplication exprimé selon la même convention ne devrait comprendre que $m+n-1$ coefficients $z_0$ à $z_{m+n-2}$, y compris un bit de signe qui serait $z_{m+n-2}$.

On peut en conclure qu'il suffit en réalité de prévoir un additionneur 82 à $m+n-1$ bits en supprimant les entrées des signes 0 et 1 et la sortie $z_{m+n-1}$ qui sont inutiles du fait que:

a) $z_{m+n-1}$ est normalement égal à $z_{m+n-2}$

b) et, en complément à deux, si les deux bits de poids le plus fort sont identiques, ils peuvent être remplacés par un bit de signe unique ayant la même valeur.

Pour terminer cette description des multiplieurs selon l'invention, on peut indiquer que dans le cas où le multiplicateur a plus de quatre bits, par exemple 16 bits, ces bits sont groupés quatre par quatre et des coefficients $c_i$ (niveaux logiques $t_i$, $w_i$) sont obtenus comme résultats des quatre multiplications. Ces niveaux peuvent être introduits dans des additionneurs comme l'étage additionneur 20, à cette différence qu'il s'agira alors d'additionneur avec propagation de retenue donc que chaque additionneur élémentaire sera en fait composé de deux demi-additionneurs du type de celui de la figure 6. Il est aussi possible que les résultats des multiplications par quatre bits soient reconvertis en binaire (complément à deux) et additionnés les uns aux autres dans des additionneurs binaires classiques.

Dans toute la description qui précède, il faut considérer que le choix du code 00, 01 ou 11 pour représenter une valeur 0, 1 ou $-1$ respectivement avec une combinaison interdite 10, est un choix possible parmi plusieurs autres et que si ce code est changé, il est nécessaire d'effectuer les légères adaptations de structure logique qui en découlent dans les circuits logiques qui ont été décrits.

Enfin, la réalisation préférentielle qui a été décrite comporte un codeur pour le multiplicateur et un codeur pour le multiplicande. Si seul le premier était utilisé, on gagnerait essentiellement sur le nombre de produits partiels à additionner mais l'étage additionneur 20 serait un additionneur binaire (donc avec propagation de retenue) et il n'y aurait pas de décodeur 22.

**Revendications**

1. Multiplieur binaire destiné à recevoir sous forme de signaux électriques logiques binaires ($x_0$ à $x_3$, $y_0$ à $y_3$) un premier nombre binaire dit multiplicande X et un second nombre binaire dit multiplicateur Y, les n signaux logiques $y_j$ représentant les chiffres du multiplicateur Y, étant convertis en n nouveaux coefficients $b_j$ ($j = 0$ à $n-1$), où les coefficients $b_j$ peuvent prendre les valeurs 0, 1 ou $-1$ exclusivement et où le produit de deux coefficients consécutifs $b_j$ et $b_{j-1}$ est obligatoirement nul, ledit multiplieur fournissant sous forme de signaux électriques logiques binaires ($z_i$) le produit desdits deux nombres, caractérisé en ce qu'il comprend: un codeur (12) pour convertir les n signaux binaires $y_j$ en un ensemble de n couples de signaux logiques binaires ($s_0$, $v_3$ à $s_0$, $v_3$) représentant les n coefficients $b_j$, l'un des signaux ($s_j$) du couple représentant le signe du coefficient $b_j$ et l'autre ($v_j$) représentant son module, et un circuit d'aiguillage (18) recevant les signaux ($x_j$) représentant le multiplicande, et commandé par les sorties du codeur, et un étage additionneur binaire (20) recevant les sorties du circuit d'aiguillage.

2. Multiplieur selon la revendication 1, caractérisé en ce que les niveaux logiques du couple de signaux logiques $s_j$, $v_j$ sont les suivants:

$$s_j = 0, v_j = 0, \text{ si } b_j = \phantom{-}0$$
$$s_j = 0, v_j = 1, \text{ si } b_j = \phantom{-}1$$
$$s_j = 1, v_j = 1, \text{ si } b_j = -1$$

la combinaison $s_j$, $v_j = 1, 0$ étant interdite.

3. Multiplieur selon la revendication 1, caractérisé en ce que le codeur comprend, pour établir le couple $s_j$, $v_j$, une porte OU-exclusif (52, 54, 56) recevant $y_j$ et $y_{j-1}$, une porte ET (64, 66, 68) recevant la sortie ($p_2$) de la porte OU-exclusif et le signal $v_{j-1}$ inversé par un inverseur (58, 60, 62), la sortie de la porte ET fournissant le signal $v_j$, avec en outre une autre porte ET (70, 72, 74, 76) recevant les signaux $v_j$ et $y_{j+1}$ et fournissant le signal $s_j$, avec $v_0 y_0$ et $y_n = y_{n-1}$.

4. Multiplieur selon la revendication 1, caractérisé en ce qu'il comprend un autre codeur (10) pour convertir les m signaux binaires $x_i$ représentant les chiffres du multiplicande X en un ensemble de signaux logiques ($r_0$, $u_0$ à $r_3$, $u_3$) représentant m coefficients $a_i$ ($i = 0$ à $m-1$) affectant chacune des puissances successives de 2 du nombre binaire X exprimé sous forme de la somme algébrique suivante des puissances successives de 2.

$$X = a_{m-1}2^{m-1} + a_{m-2}2^{m-2} + \ldots + a_1 2^1 + a_0$$

où les coefficients $a_i$ peuvent prendre les valeurs 0, 1 ou $-1$ exclusivement et où le produit de deux coefficients consécutifs $a_i$ et $a_{i-1}$ est obligatoirement nul.

5. Multiplieur selon la revendication 4, caractérisé en ce que le codeur du multiplicande fournit 2m signaux logiques binaires, sous forme de m couples $r_i$, $u_i$ représentant chacun un coefficient $a_i$, avec le même codage que les coefficients $b_j$.

6. Multiplieur selon la revendication 5, caractérisé en ce que le codeur du multiplicande fournit en outre m signaux logiques binaires $r_i^*$ où $r_i^*$ est le complément de $r_i$ si $u_i = 1$ et est nul si $u_i = 0$.

7. Multiplieur selon l'une des revendications 4 à 6, caractérisé en ce que les signaux $(r_i, r_i^*, u_i)$ issus du codeur (10) du multiplicande sont transmis à des entrées choisies de l'étage additionneur (20) par l'intermédiaire du circuit d'aiguillage (18) commandé par quatre couples consécutifs de signaux $(s_j, v_j)$ issus du codeur (12) du multiplicateur, l'étage additionneur (20) comportant une série d'additionneurs élémentaires $(A_i)$ agencés et couplés entre eux d'une manière telle qu'un étage additionneur quelconque $(A_i)$, ayant un couple de sorties «somme» $(S_i, S'_i)$ et un couple de sorties «retenue» $(R_i, R'_i)$, présente sur ses sorties «retenue» des niveaux logiques ne dépendant pas de la retenue de l'étage précédent.

8. Multiplieur selon la revendication 7, caractérisé en ce que le circuit d'aiguillage transmet à un additionneur élémentaire $(A_i)$ possédant un premier et un second couple d'entrées $(C_i, C'_i)$ et $(D_i, D'_i)$, les signaux suivants en fonction des quatre couples de signaux $(s_j, v_j)$ de commande:

– sur le premier couple d'entrées $(C_i, C'_i)$

|  |  |
|---|---|
| 0 | si $b_0$ et $b_1$ sont tous deux nuls |
| $r_i$, $u_i$ | si $b_0 = 1$ |
| $r_i^*$, $u_i$ | si $b_0 = -1$ |
| $r_{i-1}$, $u_{i-1}$ | si $b_1 = 1$ |
| $r^*_{i-1}$, $u_{i-1}$ | si $b_1 = -1$ |

– sur le second couple d'entrées $(D_i, D'_i)$

|  |  |
|---|---|
| 0 | si $b_2$ et $b_3$ sont tous deux nuls |
| $r_{i-2}$, $u_{i-2}$ | si $b_2 = 1$ |
| $r^*_{i-2}$, $u_{i-2}$ | si $b_2 = -1$ |
| $r_{i-3}$, $u_{i-3}$ | si $b_3 = 1$ |
| $r^*_{i-3}$, $u_{i-3}$ | si $b_3 = 1$ |

les signaux du type $u_{i-k}$ ou $r_{i-k}$ étant des niveaux logiques 0 si $i-k$ est négatif, et $r_i^*$ étant le complément de $r_i$ si $u_i = 1$ ou 0 si $u_i = 0$.

9. Multiplieur selon la revendication 8, caractérisé en ce que les additionneurs élémentaires fournissent sur leurs sorties des couples de sortie somme et retenue selon un codage ayant la même signification que le codage des coefficients $a_i$ ou $b_j$ en signaux $(r_i, u_i)$ ou $(s_i, v_i)$, et en ce que les sorties «somme» $(S_i, S'_i)$ d'un additionneur sont appliquées chacune à une entrée d'une porte OU respective (24, 26), ces portes recevant par ailleurs les sorties retenue $(R_{i-1}, R'_{i-1})$ de l'étage additionneur de rang immédiatement inférieur $(A_{i-1})$.

10. Multiplieur selon l'une des revendications 1 à 9, caractérisé en ce qu'il comporte un décodeur recevant des couples de signaux logiques $(t_i, w_i)$ représentant chacun un coefficient $c_i$ à trois valeurs 0, 1 ou $-1$, pour convertir le nombre Z représenté par ces couples,

$$Z = c_{m+n-2}2^{m+n-2} + \ldots c_1 2^1 + c_0,$$

en un nombre binaire représenté par des sorties logiques binaires $z_i$ avec:

$$Z = -z_{m+n-1}2^{m+n-1} + z_{m+n-2}2^{m+n-2} + \ldots z_1 2^1 + z_0$$

11. Multiplieur selon la revendication 10, caractérisé en ce que le décodeur comprend une porte OU-exclusif (78) recevant les signaux $t_i$ et $w_i$ et fournissant un signal $d_i$, un inverseur (80) recevant le signal $t_i$, et un additionneur binaire (82) ayant une entrée de retenue forcée au niveau logique 1 et des couples d'entrées de signaux à additionner, chaque couple d'entrée recevant la sortie de la porte OU-exclusif (78) et la sortie de l'inverseur (80).

## Claims

1. A binary multiplier conceived to receive in the form of binary logic electric signals ($x_0$ to $x_3$, $y_0$ to $y_3$) a first binary number called the multiplicand X and a second binary number called the multiplicator Y, the n logical signals $y_j$, which represent the digits of the multiplicator Y, being converted into n new coefficients $b_j$ ($j = 0$ to $n-1$), wherein the coefficients $b_j$ can assume the values 0, 1 or $-1$ exclusively and wherein the product of two successive coefficients $b_j$ and $b_{j-1}$ is compulsorily zero, said multiplier supplying in the form of binary logic electric signals ($z_i$) the product of said two numbers, characterized in that it comprises: an encoder (12) for converting the n binary signals $y_j$ into a set of n pairs of binary logic signals ($s_0$, $v_3$ to $s_0$, $v_3$), representing the n coefficients $b_j$, one of the signals ($s_j$) of the pair representing the sign of the coefficient $b_j$ and the other ($v_j$) representing its module, and a switching circuit (18) receiving the signals ($x_j$) representing the multiplicand and being controlled by the outputs of the encoder, and a binary adder stage (20) receiving the outputs of the switching circuit.

2. A multiplier according to claim 1, characterized in that the logic levels of the couple of logic signals $s_j$, $v_j$ are as follows:

$$s_j = 0, v_j = 0, \text{ if } b_j = 0$$
$$s_j = 0, v_j = 1, \text{ if } b_j = 1$$
$$s_j = 1, v_j = 1, \text{ if } b_j = -1$$

whereas the combination $s_j$, $v_j = 1, 0$ is a forbidden combination.

3. A multiplier according to claim 1, characterized in that the encoder comprises, in order to establish the pair $s_j$, $v_j$, an exclusive-OR gate (52, 54, 56) receiving $y_j$ and $y_{j-1}$, an AND gate (64, 66, 68) receiving the output ($p_2$) of the exclusive-OR gate and the signal $v_{j-1}$ inverted by an inverter (58, 60, 62), the output of the AND gate supplying the signal $v_j$, further including another AND gate (70, 72, 74, 76) receiving the signals $v_j$ and $y_{j+1}$ and supplying the signal $s_j$, whereby $v_0 = y_0$ and $y_n = y_{n-1}$.

4. A multiplier according to claim 1, characterized in that it comprises a further encoder (10) for converting the m binary signals $x_i$ representing the digits of the multiplicand X into a set of logic signals ($r_0$, $u_0$ to $r_3$, $u_3$) representing m coefficients $a_1$ (i = 0 to m − 1), by which is multiplied each one of the successive powers of two of the binary number X expressed in the form of the following algebraic sum of successive powers of 2

$$X = a_{m-1}2^{m-1} + a_{m-2}2^{m-2} + \ldots + a_1 2^1 + a_0$$

wherein the coefficients $a_i$ can assume the values 0, 1 or − 1 exclusively and wherein the product of two successive coefficients $a_i$ and $a_{i-1}$ is compulsorily zero.

5. A multiplier according to claim 4, characterized in that the encoder of the multiplicand supplies 2m binary logic signals in the form of m pairs $r_i$, $u_i$, each representing a coefficient $a_i$ with the same encoding rule as the coefficients $b_j$.

6. A multiplier according to claim 5, characterized in that the encoder of the multiplicand further supplies m binary logic signals $r_i^*$, in which $r_i^*$ is the complement of $r_i$, if $u_i = 1$, and in which $r_i^* = 0$, if $u_i = 0$.

7. A multiplier according to one of claims 4 to 6, characterized in that the signals ($r_i$, $r_i^*$, $u_i$) supplied by the multiplicand encoder (10) are transmitted to selected inputs of the adder stage (20) via the switching circuit (18) controlled by four successive signal pairs ($s_j$, $v_j$) supplied by the multiplicator encoder (12), the adder stage (20) comprising a series of elementary adders ($A_i$) arranged and mutually coupled in such a way that any adder stage ($A_i$) having a «sum» output pair ($S_i$, $S'_i$) and a «carry-over» output pair ($R_i$, $R'_i$) presents on its «carry-over» outputs logic levels which do not depend on the carry-over of the preceding stage.

8. A multiplier according to claim 7, characterized in that the switching circuit transmits in accordance with the four control signal pairs ($s_j$, $v_j$) the following signals to an elementary adder ($A_i$) having a first and a second pair of inputs ($C_i$, $C'_i$) and ($D_i$, $D'_i$):

− on the first pair of inputs ($C_i$, $C'_i$)
         0    if $b_0$ and $b_1$ are both zero
      $r_i$, $u_i$    if $b_0 = 1$
      $r_i^*$, $u_i$    if $b_0 = -1$
      $r_{i-1}$, $u_{i-1}$    if $b_1 = 1$
      $r_{i-1}^*$, $u_{i-1}$    if $b_1 = -1$

− on the second pair of inputs ($D_i$, $D'_i$)
         0    if $b_2$ and $b_3$ are both zero
      $r_{i-2}$, $u_{i-2}$    if $b_2 = 1$
      $r_{i-2}^*$, $u_{i-2}$    if $b_2 = -1$
      $r_{i-3}$, $u_{i-3}$    if $b_3 = 1$
      $r_{i-3}^*$, $u_{i-3}$    if $b_3 = 1$

wherein the signals of the type $u_{i-k}$ or $r_{i-k}$ show the logic levels zero, if i–k is negative and wherein $r_i^*$ is the complement if $r_i$, if $u_i = 1$, and $r_i^* = 0$, if $u_i = 0$.

9. A multiplier according to claim 8, characterized in that the elementary adders supply on their outputs couples of sum and carry-over output signals according to an encoding rule having the same signification as the encoding of the coefficients $a_i$ or $b_j$ into signals ($r_i$, $u_i$) or ($s_j$, $v_j$), and that the «sum» outputs ($S_i$, $S'_i$) of an adder are each applied to receiving the carry-over output signals ($R_{i-1}$, $R'_{i-1}$) of the adder stage having the next lower rank ($A_{i-1}$).

10. A multiplier according to one of claims 1 to 9, characterized in that it comprises a decoder receiving pairs of logic signals ($t_i$, $w_i$), each one representing a coefficient $c_i$ with three values, 0, 1 or − 1, in order to convert the number Z represented by these pairs,

$$Z = c_{m+n-2}2^{m+n-2} + \ldots c_1 2^1 + c_0$$

into a binary number represented by the binary logic outputs $z_i$ with

$$Z = -z_{m+n-1}2^{m+n-1} + z_{m+n-2}2^{m+n-2} + \ldots z_1 2^1 + z_0.$$

11. A multiplier according to claim 10, characterized in that the decoder comprises an exclusive-OR gate (78) receiving the signals $t_i$ and $w_i$ and supplying a signal $d_i$, an inverter (80) receiving the signal $t_i$, and a binary adder (82) having a carry-over input which is forced to the logic level 1, and signal input pairs to be added, each input pair receiving the output of the exclusive-OR gate (78) and the output of the inverter (80).

**Patentansprüche**

1. Binärer Multiplizierer, der in Form elektrischer logischer Binärsignale ($x_0$ bis $x_3$, $y_0$ bis $y_3$) eine erste Binärzahl, Multiplikand X genannt, und eine zweite Binärzahl, Multiplikator Y genannt, zugeführt erhält, wobei die n logischen Signale $y_j$, die die Ziffern des Multiplikators Y darstellen, in n neue Koeffizienten $b_j$ umgewandelt werden (j = 0 bis n − 1), wobei die Koeffizienten $b_j$ nur die Werte 0, 1 oder − 1 annehmen können und das Produkt zweier aufeinanderfolgender Koeffizienten $b_j$ und $b_{j-1}$ obligatorisch 0 ist, und wobei der Multiplizierer in Form elektrischer logischer Binärsignale ($z_i$) das Produkt dieser beiden Zahlen liefert, dadurch gekennzeichnet, dass er aufweist: einen Kodierer (12) zur Umwandlung der n Binärsignale $y_j$ in eine Gruppe von n Paaren logischer Binärsignale ($s_0$, $v_3$ bis $s_0$, $v_3$), die die n Koeffizienten $b_j$

darstellen, wobei eines der Signale ($s_j$) des Paars das Vorzeichen des Koeffizienten $b_j$ und das andere ($v_j$) seinen Modul darstellt, und einen Weichenkreis (18), der die den Multiplikanden darstellenden Signale ($x_j$) zugeführt erhält und von den Ausgängen des Kodierers gesteuert wird, und eine Binäraddierstufe (20), die die Ausgangssignale des Weichenkreises zugeführt erhält.

2. Multiplizierer nach Anspruch 1, dadurch gekennzeichnet, dass die logischen Pegel des Paars logischer Signale $s_j$, $v_j$ folgende sind:

$$s_j = 0, v_j = 0, \text{ wenn } b_j = \phantom{-}0$$
$$s_j = 0, v_j = 1, \text{ wenn } b_j = \phantom{-}1$$
$$s_j = 1, v_j = 1, \text{ wenn } b_j = -1$$

während die Kombination $s_j$, $v_j = 1, 0$ verboten ist.

3. Multiplizierer nach Anspruch 1, dadurch gekennzeichnet, dass der Kodierer zur Erzeugung des Paars $s_j$, $v_j$ ein Exklusiv-Oder-Tor (52, 54, 56), das $y_j$ und $y_{j-1}$ zugeführt erhält, ein Und-Tor (64, 66, 68), das das Ausgangssignal ($p_2$) des Exklusiv-Oder-Tores und das von einem Inverter (58, 60, 62) invertierte Signal $v_{j-1}$ zugeführt erhält und das Signal $v_j$ liefert, sowie ausserdem ein weiteres Und-Tor (70, 72, 74, 76) aufweist, das die Signale $v_j$ und $y_{j+1}$ zugeführt erhält und das Signal $s_j$ liefert, mit $v_0 = y_0$ und $y_n = y_{n-1}$.

4. Multiplizierer nach Anspruch 1, dadurch gekennzeichnet, dass er einen weiteren Kodierer (10) zur Umwandlung der m Binärsignale $x_i$, die die Ziffern des Multiplikanden X darstellen, in eine Gruppe logischer Signale ($r_0$, $u_0$ bis $r_3$, $u_3$) aufweist, die m Koeffizienten $a_1$ ($i = 0$ bis $m-1$) darstellen, mit denen je eine der aufeinanderfolgenden Potenzen von 2 der durch die folgende algebraische Summe der Potenzen von 2 ausgedrückten Binärzahl X multipliziert wird

$$X = a_{m-1}2^{m-1} + a_{m-2}2^{m-2} + \ldots\ldots + a_1 2^1 + a_0$$

wobei die Koeffizienten $a_i$ nur die Werte 0, 1 oder $-1$ annehmen können und das Produkt zweier aufeinanderfolgender Koeffizienten $a_i$ und $a_{i-1}$ stets Null ist.

5. Multiplizierer nach Anspruch 4, dadurch gekennzeichnet, dass der Multiplikandenkodierer 2m logische Binärsignale in Form von n Paaren $r_i$, $u_i$ liefert, die je einen Koeffizienten $a_i$ darstellen, mit derselben Kodierung wie die Koeffizienten $b_j$.

6. Multiplizierer nach Anspruch 5, dadurch gekennzeichnet, dass der Multiplikandenkodierer ausserdem m logische Binärsignale $r_i{}^*$ liefert, wobei $r_i{}^*$ das Komplement von $r_i$ ist, wenn $u_i = 1$, während $r_i{}^* = 0$, wenn $u = 0$.

7. Multiplizierer nach einem der Ansprüche 4 bis 6, dadurch gekennzeichnet, dass die vom Multiplikandenkodierer gelieferten Signale ($r_i$, $r_i{}^*$, $u_i$) an ausgewählte Eingänge der Addiererstufe (20) über den Weichenkreis (18) angelegt werden, der von vier aufeinanderfolgenden Signalpaaren ($s_j$, $v_j$) gesteuert wird, die vom Multiplikatorkodierer (12) stammen, wobei die Addierstufe (20) eine Reihe von Elementaraddierern ($A_i$) aufweist, die so angeordnet und untereinander gekoppelt sind, dass eine beliebige Addierstufe ($A_i$), die ein Sum-

menausgangspaar ($S_i$, $S'_i$) und ein Übertragsausgangspaar ($R_i$, $R'_i$) besitzt, an seinen Übertragsausgängen logische Pegel aufweist, die nicht vom Übertrag der vorhergehenden Stufe abhängen.

8. Multiplizierer nach Anspruch 7, dadurch gekennzeichnet, dass der Weichenkreis an einen Elementaraddierer ($A_i$), der ein erstes und ein zweites Paar von Eingängen ($C_i$, $C'_i$) und ($D_i$, $D'_i$) besitzt, die folgenden Signale abhängig von den vier Paaren von Steuersignalen ($s_i$, $v_i$) liefert:

– an das erste Paar von Eingängen ($C_i$, $C'_i$)

| | |
|---|---|
| 0 | wenn $b_0$ und $b_1$ beide null sind |
| $r_i$, $u_i$ | wenn $b_0 = 1$ |
| $r_i{}^*$, $u_i$ | wenn $b_0 = -1$ |
| $r_{i-1}$, $u_{i-1}$ | wenn $b_1 = 1$ |
| $r_{i-1}^*$, $u_{i-1}$ | wenn $b_1 = -1$ |

– an das zweite Paar von Eingängen ($D_i$, $D'_i$)

| | |
|---|---|
| 0 | wenn $b_2$ und $b_3$ beide null sind |
| $r_{i-2}$, $u_{i-2}$ | wenn $b_2 = 1$ |
| $r_{i-2}^*$, $u_{i-2}$ | wenn $b_2 = -1$ |
| $r_{i-3}$, $u_{i-3}$ | wenn $b_3 = 1$ |
| $r_{i-3}^*$, $u_{i-3}$ | wenn $b_3 = 1$ |

wobei die Signale vom Typ $u_{i-k}$ oder $r_{i-k}$ logische Pegel 0 sind, wenn $i-k$ negativ ist und $r_i{}^*$ das Komplement von $r_i$ ist, wenn $u_i = 1$, bzw. $r_i{}^* = 0$, wenn $u_i = 0$.

9. Multiplizierer nach Anspruch 8, dadurch gekennzeichnet, dass die Elementaraddierer an ihren Ausgängen Ausgangspaare für die Summe und den Übertrag gemäss einer Kodierung liefern, die dieselbe Bedeutung wie die Kodierung der Koeffizienten $a_i$ oder $b_j$ in die Signale ($r_i$, $u_i$) oder $s_j$, $V_j$) besitzen, und dass die Summenausgänge ($S_i$, $S'_i$) eines Addierers je an einen Eingang eines Oder-Tors (24, 26) angelegt sind, wobei diese Tore im übrigen die Signale der Übertragsausgänge ($R_{i-1}$, $R'_{i-1}$) der rangmässig unmittelbar darunterliegenden Addiererstufe ($A_{i-1}$) zugeführt erhalten.

10. Multiplizierer nach einem der Ansprüche 1 bis 9, dadurch gekennzeichnet, dass er einen Dekodierer aufweist, der Paare logischer Signale ($t_i$, $w_i$) empfängt, die je einen Koeffizienten $c_i$ mit drei Wertemöglichkeiten, 0, 1 oder $-1$ darstellen, um die von diesen Paaren definierte Zahl

$$Z = c_{m+n-2}2^{m+n-2} + \ldots c_1 2^1 + c_0$$

in eine Binärzahl umzuwandeln, die durch die logischen Binärausgänge $z_i$ definiert ist, mit

$$Z = -z_{m+n-1}2^{m+n-1} + z_{m+n-2}2^{m+n-2} + \ldots z_1 2^1 + z_0.$$

11. Multiplizierer nach Anspruch 10, dadurch gekennzeichnet, dass der Dekodierer ein Exklusiv-Oder-Tor (78), das die Signale $t_i$ und $w_i$ zugeführt erhält und ein Signal $d_i$ liefert, einen Inverter (80), der das Signal $t_i$ empfängt, und einen Binäraddierer (82) enthält, dessen Übertragseingang auf dem logischen Pegel 1 festgehalten wird und dessen Eingangspaare die zu addierenden Signale empfangen, wobei jedes Eingangspaar mit dem Ausgang des Exklusiv-Oder-Tors (78) und dem Ausgang des Inverters (80) verbunden ist.

**Fig.1**

**Fig.2**

Fig. 3

Fig. 4

Fig.5

Fig.6

Fig.7

0 110 767

Fig.8